Europäisches Patentamt

(19) European Patent Office

Office européen des brevets

(11) Publication number: **0 056 521**
**B1**

(12) # EUROPEAN PATENT SPECIFICATION

(45) Date of publication of patent specification: **21.11.85**

(51) Int. Cl.⁴: **H 02 K 21/38**

(21) Application number: **81305870.8**

(22) Date of filing: **14.12.81**

(54) **Electric motor.**

(30) Priority: **15.01.81 GB 8101232**

(43) Date of publication of application:
**28.07.82 Bulletin 82/30**

(45) Publication of the grant of the patent:
**21.11.85 Bulletin 85/47**

(84) Designated Contracting States:
**AT BE CH DE FR IT LI LU NL SE**

(56) References cited:
**DE-A-2 720 053**
**DE-A-2 828 640**
**DE-A-2 828 842**
**GB-A- 845 394**
**GB-A-1 263 386**

(73) Proprietor: **HORSTMANN GEAR GROUP LIMITED**
**Newbridge Works**
**Bath BA1 3EF (GB)**

(72) Inventor: **Harold, John Limming**
**61 Newbridge Hill**
**Bath Avon (GB)**

(74) Representative: **Powell, Stephen David et al**
**J.F. Williams & Co. 34 Tavistock Street**
**London WC2E 7PB (GB)**

## Description

The present invention relates to electric motors and more particularly to electric motors of the types disclosed in Specification No. GB—A—1600380. Such motors comprise a rotor of unmagnetised magnetic material having a radial face with a plurality of segments which are angularly distributed around the axis of rotation of the rotor, a stator including a plurality of permanent magnet poles having polefaces spaced apart and distributed around the axis of rotation of the rotor, all of which polefaces are spaced from and face said radial face of the rotor and present the same magnetic polarity thereto, and a winding wound upon the stator and so arranged that on energisation of the winding by an alternating current the relative flux density of adjacent ones of the polefaces is caused to alternate without polarity change about the mean value so that a segment is attracted towards the adjacent poleface of greater flux density and thereby to induce rotation of the rotor, the stator further including spaced inner and outer annular members which surround and extend axially of the axis of rotation of the rotor and upon which the polefaces are mounted.

The preambles of claims 1 and 11 correspond to motors as disclosed in GB—A—1600380.

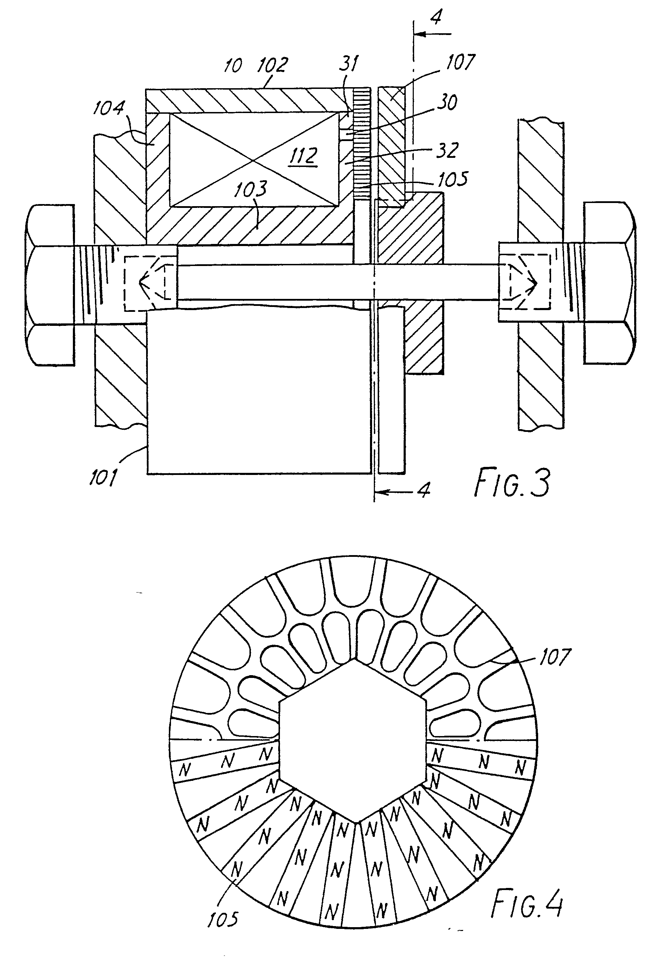

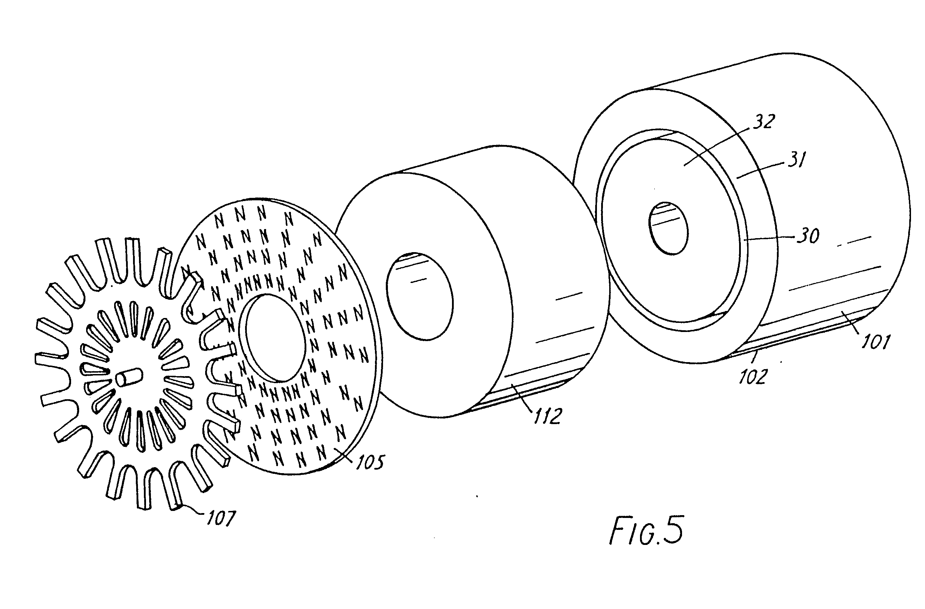

Figs. 4 and 5 of GB—A—1263386 disclose a motor with a stator having inner and outer annular members with teeth which are parallel to the magnetic field which is wholly radial. The rotor is magnetised and the stator members are adjacent to different faces of the rotor.

According to a first aspect of the present invention there is provided a self-starting synchronous electric motor comprising a rotor of unmagnetised magnetic material having a radially extending face, and a stator comprising spaced inner and outer annular members which face the radially extending face of the rotor and which are concentric with and extend axially of the axis of rotation of the rotor, the stator having a plurality of permanent magnet pole elements which face the radially extending face of the rotor characterised in that the end of one or each of the annular members adjacent the rotor is provided with a radial flange which extends towards the other annular member.

Thus by partly closing the magnetic flux path of the stator one can increase the flux from the stator into the rotor. This substantially reduces the power requirement for self-starting and running of the motor.

The pole elements of the stator may all be of the same polarity. The inner and outer annular members may be provided with respective pluralities of pole elements or they may share a plurality of pole elements. The latter option has the advantage of simplifying assembly of the motor. Further simplification may be achieved by employing a single magnetised disc to provide said pole elements.

The or each flange may be of the same material as the annular members, in which case it is preferably integral with the respective annular member, thus saving an assembly step. However an integral flange means that during assembly a coil for the stator has to be wound around the inner annular member. If a separate flange is used, either of the same or different material, there is the advantage that an already wound coil may be placed on to the inner annular member of the stator.

According to a second aspect of the present invention there is provided an alternating current synchronous electric motor comprising a rotor of unmagnetised magnetic material having a radial face with a plurality of segments which are angularly distributed around the axis of rotation of the rotor, a stator including a plurality of permanent magnet poles having polefaces spaced apart and distributed around the axis of rotation of the rotor, all of which polefaces are spaced from and face said radial face of the rotor and present the same magnetic polarity thereto, and a winding wound upon the stator and so arranged that on energisation of the winding by an alternating current the relative flux density of adjacent ones of the polefaces is caused to alternate without polarity change about the mean value so that a segment is attracted towards the adjacent poleface of greater flux density thereby to induce rotation of the rotor, the stator further including spaced inner and outer annular members which surround and extend axially of the axis of rotation of the rotor and upon which the polefaces are mounted, characterised in that the end of one or each of the annular members adjacent the rotor is provided with a radial flange portion which extends towards the other annular member, whereby to reduce the power requirements for self-starting of the motor.

Preferred embodiments of the present invention will now be described by way of example with reference to the accompanying drawings of which:

Fig. 1 shows a cross-section of a first embodiment of an electric motor in accordance with the present invention:

Fig. 2 shows a cross-section of a second embodiment of an electric motor in accordance with the present invention;

Fig. 3 shows a side view, partially in cross-section of a third embodiment of an electric motor in accordance with the present invention;

Fig. 4 is a partially sectional end view of the motor of Fig. 3, taken along the line 4—4; and

Fig. 5 is a perspective view of a motor similar to the motor of Fig. 1. but having a modified stator.

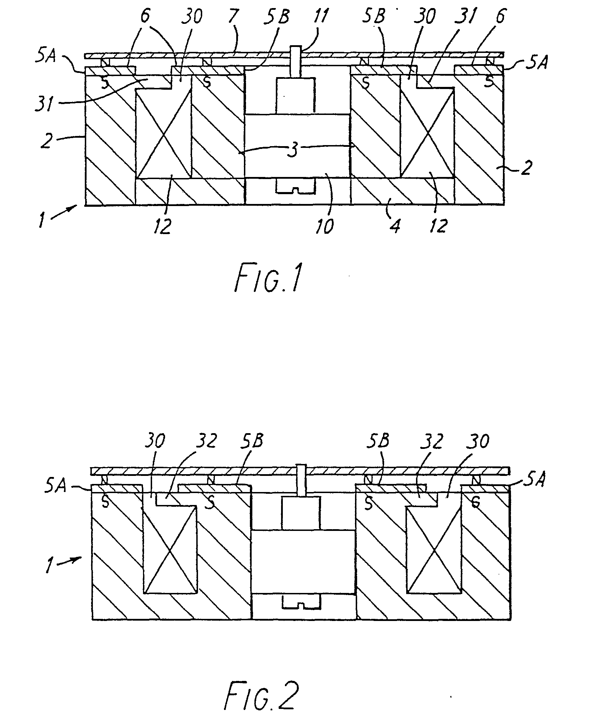

Referring to the drawings, Fig. 1 shows an electric motor comprising a magnetic rotor 7 and a stator assembly 1. The stator assembly comprises a core of magnetic material having an annular outer core element 2 and an annular inner core element 3 concentric with the outer core element. Elements 2, 3 define an annular space which is closed at the end remote from rotor 7 by annular portion 4. The stator assembly 1 further comprises permanent magnet stator pole elements 5A, 5B arranged at equal angular intervals about the axis of the core, alternate pole elements 5A, 5B around the core axis being carried by the outer and inner core elements 2, 3 respectively. The pole elements 5A, 5B have flat coplanar polefaces 6 which lie in a plane perpendicular to the axis of stator assembly 1.

Inner core element 3 of the stator assembly is of hollow tubular construction and houses a nonmagnetic bearing assembly 10 for a rotor shaft 11. A motor winding 12 is wound concentrically in the annular space between the core element, 2, 3.

As so far described the motor is the same as that disclosed in Specification No. GB—A—1600380 the contents of which are hereby incorporated into the present specification. The improvement of the present embodiment lies in the provision of a flange portion 31 on the outer core element 2. Flange 31 extends radially inwardly towards inner core element 3 to define a gap 30. By partly closing the magnetic flux path in the stator and increasing the area of the air gap between the stator and the rotor the flux from winding 12 linking the rotor 7 is increased.

Of course the leakage flux which does not go through rotor 7 is also increased, but tests have shown that as long as the air gap 30 is above a certain size, e.g. 0.1 mm, its gap reluctance is greater than the reluctance of the rotor gap.

The flux of the permanent magnet pole elements, 5A, 5B is substantially unaffected by flange 31 and has an air return path as in the above mentioned copending application.

Figure 2 shows a second embodiment of the present invention. In this case a flange portion 32 is provided which extends radially outwardly from the inner core element and parallel to the rotor.

Figure 3 shows a third embodiment of the present invention comprising a stator assembly 101 and a rotor 107. The motor may be a 10 mm motor with a 20 pole staggered rotor 107 weighing 0.24 gm. Stator assembly 101 comprises core elements 102, 103, 104 and permanent magnetic pole elements 105. Since all the elements 105 are of the same polarity they may be interconnected in groups as shown in Fig. 4, rather than separate as in the preceding embodiments. Furthermore, as shown in the modification of Fig. 5, all the pole segments may be provided on a single disc, the poles being magnetised in a desired pattern.

As an alternative to the arrangement shown in Fig. 4, it is possible to stagger the polefaces and have straight arms on the rotor.

In this embodiment flange portions 31, 32 are provided on both the outer and inner core elements 102, 103 to define a narrow air gap 30. A motor winding 112 is providing in the space defined by core elements 102, 103, 104 and flanges 31, 32. In a practical example the winding comprises 6000 turns of 0.0305 mm diameter copper wire.

An advantage of the above described arrangements is a substantially reduced power requirement for self-starting and running of the motors. Practical tests have shown that for the same motor, the requirement for self-starting and running was reduced from 1.52 mVA to 0.17 mVA by the provisions of flange portions.

The core elements 102, 103, 104 may be made of free cutting steel (e.g. Ledbury) and flanges 31 and/or 32 may be made integral parts of the stator. The stator assembly then resembles a bobbin and the coil winding 112 is then wound upon it. Alternatively the core elements may be made of moulded ferrite material. In this case rings of Mumetal (Registered Trade Mark) or radiometal may be inserted to provide the flange portions.

The invention is not restricted to motors of the above type and flanges such as 31 and/or 32 may be provided in any stator having inner and outer concentric members.

## Claims

1. A self-starting synchronous electric motor comprising a motor (7; 107) of unmagnetized magnetic material having a radially extending face, and a stator (1; 101) comprising spaced inner and outer annular members (3, 2; 103, 102) which face the radially extending face of the rotor and which are concentric with and extend axially of the axis of rotation of the rotor, the stator having a plurality of permanent magnet pole elements (5A, 5B; 105) which face the radially extending face of the rotor, characterised in that the end of one or each of the annular members adjacent the rotor is provided with a radial flange (31, 32) which extends towards the other annular member.

2. A motor as claimed in claim 1, wherein all of the pole elements are of the same magnetic polarity.

3. A motor as claimed in claim 1 or 2, wherein the inner and outer annular members are provided with respective pluralities of pole elements (5B, 5A).

4. A motor as claimed in claim 3, wherein the flange is partly coextensive with the pole elements.

5. A motor as claimed in claim 1 or 2, wherein the inner and outer annular members share a plurality of pole elements (105).

6. A motor as claimed in claim 1 or 2, wherein a single magnetised disc provides said pole elements.

7. A motor as claimed in any preceding claim wherein said flanges, or said flange and the other annular member, define a uniform annular gap (30), the reluctance of said gap being greater than the reluctance of the gap between the rotor and the stator.

8. A motor as claimed in any preceding claim, wherein the flange is of the same material as the annular members.

9. A motor as claimed in claim 8, wherein the flange is integral with its respective annular member.

10. A motor as claimed in any of claims 1 to 7, wherein the flange is of a different material from the annular members.

11. An alternating current synchronous electric motor comprising a rotor (7, 107) of unmagnetised magnetic material having a radial face with a plurality of segments which are angularly distributed around the axis of rotation of the rotor, a stator (1; 101) including a plurality of permanent magnet poles (5A, 5B) having polefaces (6) spaced apart and distributed around the axis of rotation of the rotor, all of which polefaces are spaced from and face said radial face of the rotor and present the same magnetic polarity thereto, and a winding (12; 112) wound upon the stator and so arranged that on energisation of the winding by an alternating current the relative flux density of adjacent ones of the polefaces is caused to alternate without polarity change about the mean value so that a segment is attracted towards the adjacent poleface of greater flux density thereby to induce rotation of the rotor, the stator further including spaced inner and outer annular members (3, 2; 103, 102) which surround and extend axially of the axis of rotation of the rotor and upon which the polefaces are mounted, characterised in that the end of one or each of the annular members adjacent the rotor is provided with a radial flange portion (31, 32) which extends towards the other annular member, whereby to reduce the power requirements for self-starting of the motor.

## Revendications

1. Un moteur électrique synchrone à auto-démarrage comprenent un rotor (7; 107) formé d'un matériau magnétique non-magnétisé et comportant une face s'étendant radialement, et un stator (1; 101) comprenant des éléments annulaires intérieur et extérieur (3, 2; 103, 102) espacés qui sont dirigés vers la face, s'étendant radialement, du rotor et qui sont concentriques à et s'étendent axialement par rapport à l'axe de rotation du rotor, le stator comportant une pluralité d'éléments polaires à aimants permanents (5A, 5B; 105) qui sont dirigés vers la face, s'étendant radialement, du rotor, caractérisé en ce que l'extrémité d'un ou de chacun des éléments annulaires adjacents au rotor est pourvue d'une collerette radiale (31, 32) qui s'étend en direction de l'autre élément annulaire.

2. Un moteur tel que revendiqué dans la revendication 1, dans lequel tous les éléments polaires ont la même polarité magnétique.

3. Un moteur tel que revendiqué dans la revendication 1 ou 2, dans lequel les éléments annulaires intérieur et extérieur sont pourvus de pluralités respectives d'éléments polaires (5A, 5B).

4. Un moteur tel que revendiqué dans la revendication 3, dans lequel la collerette est partiellement de même étendue que les éléments polaires.

5. Un moteur tel que revendiqué dans la revendication 1 ou 2, dans lequel les éléments annulaires intérieur et extérieur partagent une pluralité d'éléments polaires (105).

6. Un moteur tel que revendiqué dans la revendication 1 ou 2, dans lequel un seul disque magnétisé forme lesdits éléments polaires.

7. Un moteur tel que revendiqué dans l'une quelconque des revendications précédentes, dans lequel lesdites collerettes, ou ladite collerette et l'autre élément annulaire, définissent un entrefer annulaire uniforme (30), la réluctance dudit entrefer étant supérieure à la réluctance de l'entrefer entre le rotor et le stator.

8. Un moteur tel que revendiqué dans l'une quelconque des revendications précédentes, dans lequel la collerette est formée du même matériau que les éléments annulaires.

9. Un moteur tel que revendiqué dans la revendication 8, dans lequel la collerette est intégrée à son élément annulaire respectif.

10. Un moteur tel que revendiqué dans l'une quelconque des revendications 1 à 7, dans lequel la collerette est formée d'un matériau différent des éléments annulaires.

11. Un moteur électrique synchrone à courant alternatif comprenant un rotor (7; 107) formé d'un matériau magnétique non-magnétisé et comportant une face radiale pourvue d'une pluralité de segments qui sont répartis angulairement autour de l'axe de rotation du rotor, un stator (1; 101) comportant une pluralité de pôles à aimants permanents (5A, 5B) comportant des faces polaires (6) qui sont espacées et réparties autour de l'axe de rotation du rotor, toutes lesdites faces polaires étant espacées de et dirigées vers ladite face radiale du rotor et présentant la même polarité magnétique que celle-ci, et un enroulement (12; 112) enroulé sur le stator et agencé de manière que, lors d'une excitation de l'enroulement par un courant alternatif, la densité de flux relative de faces polaires adjacentes alterne sans changement de polarité par rapport à la valeur moyenne de telle sorte qu'un segment soit attiré vers la face polaire adjacente de plus grande densité de flux en produisant ainsi une rotation du rotor, le stator comportant en outre des éléments annulaires intérieur et extérieur (3, 2; 103, 102) espacés qui entourent et s'étendent axialement par rapport à l'axe de rotation du rotor et sur lesquels les faces polaires sont montées, caractérisé en ce que l'extrémité d'un ou de chacun des éléments annulaires adjacents au rotor est pourvue d'une partie formant collerette radiale (31, 32) qui s'étend vers l'autre élément annulaire, en réduisant ainsi la consommation de puissance pour un auto-démarrage du moteur.

## Patentansprüche

1. Selbststartender elektrischer Synchronmotor, der einen Rotor (7; 107) aus unmagnetisiertem magnetischem Material mit einer sich radial erstreckenden Stirnfläche und einen Stator (1; 101) mit im Abstand liegenden inneren und äußeren ringförmigen Gliedern (3, 2; 103, 102) aufweist, welche der sich radial erstreckenden Stirnfläche des Rotors zugewandt und konzentrisch zu der Rotationsachse des Rotors sind und sich axial in Richtung dieser Achse erstrekken, wobei der Stator eine Mehrzahl von permanentmagnetischen Polelementen (5A, 5B; 105) aufweist, welche der sich radial erstreckenden Stirnfläche des Rotors zugewandt sind, dadurch gekennzeichnet, daß das Ende eines oder jedes ringförmigen Gliedes nahe dem Rotor mit einem radialen Flansch (31, 32) versehen ist, der sich zu dem anderen ringförmigen Glied hin erstreckt.

2. Motor nach Anspruch 1, bei dem alle Polelemente von der gleichen magnetischen Polarität sind.

3. Motor nach Anspruch 1 oder 2, bei dem die inneren und äußeren ringförmigen Glieder jeweils mit einer Mehrzahl von Polelementen (5B, 5A) versehen sind.

4. Motor nach Anspruch 3, bei dem der Flansch teilweise gleiche Ausdehnung wie die Polelemente aufweist.

5. Motor nach Anspruch 1 oder 2, bei dem die inneren und äußeren ringförmigen Glieder eine Mehrzahl von Polelementen (105) gemeinsam haben.

6. Motor nach Anspruch 1 oder 2, bei dem eine einzige magnetisierte Scheibe die besagten Polelemente liefert.

7. Motor nach irgendeinem der voranstehenden Ansprüche, bei dem die besagten Flansche oder der besagte Flansch und das andere ringförmige Glied einen gleichförmigen ringartigen Spalt (30) definieren, dessen magnetischer Widerstand größer als der magnetische Widerstand des Spaltes zwischen dem Rotor und dem Stator ist.

8. Motor nach irgendeinem der voranstehenden Ansprüche, bei dem der Flansch aus dem gleichen Material wie die ringförmigen Glieder ist.

9. Motor nach Anspruch 8, bei dem der Flansch mit dem zugehörigen ringförmigen Glied integral ausgebildet ist.

10. Motor nach irgendeinem der Ansprüche 1 bis 7, bei dem der Flansch aus einem von dem Material der ringförmigen Glieder verschiedenen Material besteht.

11. Wechselstrom-Synchronmotor mit einem Rotor (7, 107) aus unmagnetisiertem magnetischem Material, der eine sich radial erstreckende Stirnfläche mit einer Mehrzahl winkelförmig um die Drehachse des Rotors verteilten Segmenten aufweist, und mit einem Stator (1; 101), welcher eine Mehrzahl permanentmagnetischer Pole (5A, 5B) mit voneinander getrennten, um die Drehachse des Rotors verteilten Polflächen (6) aufweist, die alle von den besagten Stirnflächen des Rotors beabstandet und diesen zugekehrt sind und dazu die gleiche magnetische Polarität aufweisen, wobei eine Wicklung (12, 112) um den Stator gewickelt und so angeordnet ist, daß bei Erregung der Wicklung mit einem Wechselstrom die relative magnetische Flußdichte nahe einer der Polflächen veranlaßt wird sich zu ändern ohne einen Polaritätswechsel über den Mittelwert, so daß ein Segment in Richtung der benachbarten Polfläche mit größerer Flußdichte gezogen wird und hierdurch die Rotation des Rotors veranlaßt, wobei der Stator im Abstand angeordnete innere und äußere ringförmige Glieder (3, 2; 103, 102) aufweist, welche sich axial um die Rotationsachse des Rotors erstrecken und diese umschließen, und an denen die Polflächen gehalten sind, dadurch gekennzeichnet, daß das Ende eines oder jedes ringförmigen Gliedes nahe dem Rotor mit einem radialen Flanschbereich (31, 32) versehen ist, welcher sich in Richtung des anderen ringförmigen Gliedes erstreckt, um die Kraftanforderungen für das Selbststarten des Motors zu verringern.

*FIG.1*

*FIG.2*

FIG.3

FIG.4

2

FIG. 5